Europäisches Patentamt

European Patent Office

Office européen des brevets

(19)

(11) Publication number: **0 331 849**
**A2**

## EUROPEAN PATENT APPLICATION

(21) Application number: **88311877.0**

(51) Int. Cl.⁴: **H02M 7/53**

(22) Date of filing: **15.12.88**

(30) Priority: **05.03.88 GB 8805295**

(43) Date of publication of application:
**13.09.89 Bulletin 89/37**

(84) Designated Contracting States:
**CH DE FR GB LI SE**

(71) Applicant: **ROLLS-ROYCE plc**
**65 Buckingham Gate**
**London, SW1E 6AT(GB)**

(72) Inventor: **Hunter, Ian**
**155 Almond Street**
**Derby(GB)**
Inventor: **Sadler, Michael**
**Meadow View Repton Road**
**Newton Solney Burton on Trent(GB)**

(74) Representative: **Gunn, Michael Alan**
**Company Patents and Licensing Department**
**Rolls-Royce plc P.O. Box 31 Moor Lane**
**Derby DE2 8BJ(GB)**

(54) A three phase electrical converter with a neutral.

(57) A three phase electrical converter (10) a neutral output (40) is necessary for supplying power to single phase loads.

Three pairs of transistor switches (18,20,24,26,30 and 32) releasably connect the three phase outputs (22,28 and 34) sequentially to the output terminals (14,16) of a voltage source (12).

A fourth pair of transistor switches (36,38) releasably connects the neutral output (40) sequentially with the output terminals (14,16) of the voltage source (12). The neutral output (40) is always connected to the output terminal (14,16) which is at zero potential. The transistor switches (36,38) are opened and closed at the desired converter output frequency or some suitable multiple of the desired converter output frequency, preferably three times.

The output waveforms can be improved by using increased frequency of operation of the switches (36,38) to give pulses arranged about a peak voltage. The width of the pulses can be varied to adjust the output voltages.

Fig.1

# A THREE PHASE ELECTRICAL CONVERTER WITH A NEUTRAL

The present invention relates to three phase electrical converters which are provided with a neutral.

It is often a requirement for three phase DC-AC electrical converters to supply power to a single phase load. In order to supply power to a single phase load it is necessary to have a neutral point.

Neutral points are commonly provided using transformer arrangements, however such arrangements are relatively heavy and relatively bulky, and in some applications it is necessary to maintain the weight and size of the converter to a minimum.

The present invention seeks to provide a three phase electrical converter which has a neutral point for the supplying of power to a single phase load, which is of reduced weight and size.

Accordingly the present invention provides a three phase electrical converter comprising a voltage source having output terminals, a first phase output, a second phase output, a third phase output, and a neutral output connected sequentially at the desired converter output frequency or at a multiple of the desired converter output frequency to the output terminals of the voltage source by a pair of switches such that the output terminal connected to the neutral output is referenced to earth potential.

The connection of the neutral output to the output terminals of the voltage source by the pair of switches may be modulated to produce peak voltages in the voltage signals at the three phase outputs with voltage pulses positioned about the peak voltages.

The connection may be modulated so that the pulses are positioned symmetrically about the peak voltage.

The connection may be modulated so that the pulses are positioned within a phase region of 60° about the peak voltage.

The first phase output may be connected sequentially at a first frequency to the output terminals of the voltage source by a first pair of switches, the second phase output connected sequentially at the first frequency and 120° out of phase with the first phase output to the output terminals of the voltage source by a second pair of switches, the third phase output is connected sequentially at the first frequency and 120° out of phase with the first phase output and the second phase output to the output terminals of the voltage source by a third pair of switches, the neutral output is connected sequentially at the desired converter output frequency or at a multiple of the desired converter output frequency to the output terminals of the voltage source by a fourth pair of switches such that the output terminal connected to the neutral output is referenced to earth potential.

The first phase output may be connected to one of the output terminals of the voltage source by a first pair of switches, the second phase output is connected sequentially at a first frequency to the output terminals of the voltage source by a second pair of switches, the third phase output is connected sequentially at the first frequency and 120° out of phase with the second phase output to the output terminals of the voltage source by a third pair of switches, the neutral output is connected sequentially at the desired converter output frequency or at a multiple of the desired converter output frequency to the output terminals of the voltage source by a fourth pair of switches such that the output terminal connected to the neutral output is referenced to earth potential.

The switches may be power semi-conductors.

The power semi-conductors may be transistors.

The voltage source may be a DC link capacitor.

The fourth pair of switches may connect the neutral output to the output terminals at three times the desired converter output frequency.

The electrical converter may be a DC to AC electrical converter.

The electrical converter may be an AC to AC electrical converter.

The present invention will be more fully described by way of example, with reference to the accompanying drawings, in which:-

Figure 1 is a diagrammatic representation of a three phase electrical converter with a neutral according to the present invention.

Figure 2 shows graphs illustrating waveforms at various points within the converter.

Figure 3 shows graphs illustrating waveforms at various points within the converter when operating in a different mode.

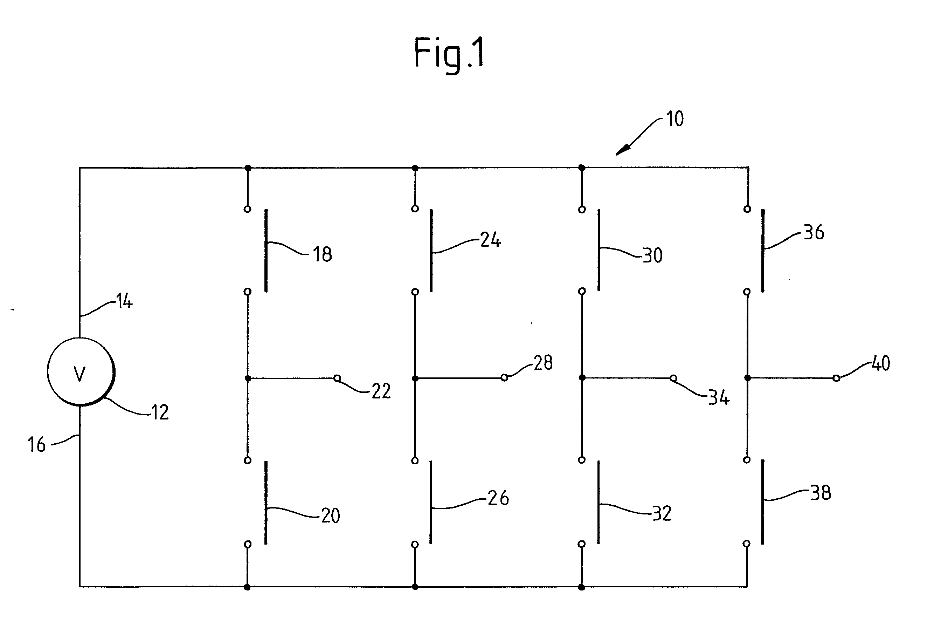

A circuit comprising a three phase electrical converter 10 with a neutral is shown in Figure 1. The circuit 10 comprises a voltage source 12 which has output terminals 14 and 16, a first pair of switches 18 and 20 which releasably electrically connect the output terminals 14 and 16 to a first phase output 22, a second pair of switches 24 and 26 which releasably electrically connect the output terminals 14 and 16 to a second phase output 28, a third pair of switches 30 and 32 which releasably electrically connect the output terminals 14 and 16 to the third phase output 34 and a fourth pair of switches 36 and 38 which releasably electrically connect the output terminals 14 and 16 to a neutral output 40.

The potential of the output terminals 14 and 16 of the voltage source 12 change between +V and O, and between O and -V respectively, and therefor the potential of output terminal 14 is always V volts above the potential of output terminal 16, as can be seen in graphs 2(a) and 2(b).

The output terminals 14 and 16 of the voltage source 12 are electrically connected sequentially to the first phase output 22, the second phase output 28 and the third phase output 34, so that only one of the three phase outputs is electrically connected to the voltage source 12 at any time. The switches 18,20,24,26,30 and 32 perform the function of sequentially electrically connecting the three phase outputs to the voltage source 12. The voltage waveforms at the first phase output 22, the second phase output 28 and the third phase output 32 can be seen in graphs 2(d), 2(e) and 2(f) respectively.

Referring to graphs 2(d), 2(e) and 2(f) it can be seen that in operation initially the second phase output 28 is at a potential of -V volts, and is therefore connected to the output terminal 16 by the switch 26. Switch 26 opens to disconnect the second phase output 28 from output terminal 16, as switch 18 closes to connect first phase output 22 to output terminal 14 which is at +V volts. Switch 18 opens to disconnect the first phase output 22 from output terminal 16, as switch 32 closes to connect the third phase output 34 with the output terminal 16 which is again at -V volts.

The switch 32 opens to disconnect the third phase output 34 from output terminal 16, as the switch 24 closes to connect the second phase output 28 to output terminal 14 which is at +V volts. Switch 24 opens, as the switch 20 closes to connect the first phase output 22 to output terminal 16 which is at -V volts. Finally to complete the cycle switch 20 opens, as switch 30 closes to connect the third phase output 34 with the output terminal 14 which is at +V volts.

The three phases of output are electrically connected sequentially to the output terminals of the voltage source by respective pairs of switches at a predetermined frequency to give the desired converter output frequency, the three phases of output are electrically connected to the output terminals with phase differences of 120˚ therebetween.

Line voltages are obtained from the differences between the phase voltages as can be seen in graphs 2(g), 2(h) and 2(i). These are obtained respectively from the difference between the first phase output and the second phase output, the difference between the second phase output and the third phase output and the difference between the third phase output and the first phase output.

It is possible to obtain reversal of phase rotation by altering the sequence of operation of the switches, and graphs 2(j), 2(k) and 2(l) illustrate phase reversal at the three phases of output.

The output terminals 14 and 16 of the voltage source 12 are also electrically connected sequentially to the neutral output 40. The switches 36 and 38 alternately connect the neutral output 40 to the output terminals 14 and 16 of the voltage source 12, such that the neutral output 40 is always connected to the output terminal which is at zero potential. The switches 36 and 38 in this example are opened and closed at three times the desired converter output frequency. It may be possible to open and close switches 36 and 38 at the desired converter output frequency, or at some other suitable multiple of the desired converter output frequency.

Switching of the neutral output in this way alternately references the output terminals of the voltage source to earth, neutral, potential in turn. The lower potential of the output terminals is referenced to zero to obtain a positive output voltage in one circumstance, whilst in the other case the upper potential of the output terminals is references to zero to obtain a negative output voltage.

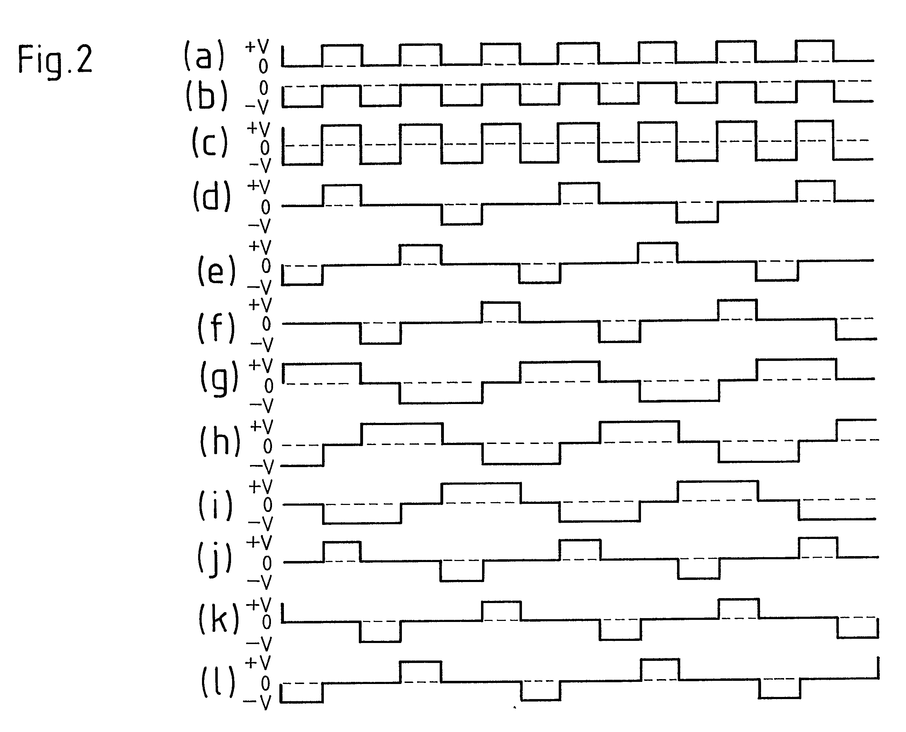

A waveform illustrated in Figure 2(c) is produced across the input terminals of the three phase converter, and is in effect a bipolar square wave amplitude of ± V volts.

Fourier analysis reveals the correct ratio of harmonic frequency components between the line and phase voltages of √3 to 1.

The line voltage waveforms shown in graphs 2-(g), 2(h) and 2(i) contain less harmonic frequency components than the phase voltage waveforms shown in graphs 2(d), 2(e) and 2(f), owing to cancellation of harmonics between any two phase voltages. This results in filtering of the output voltages, to produce a purely sinusoidal waveform, being more readily achieved for the line voltage waveform than for the phase voltage waveform.

To compensate for the limitations of the switches that are to be used in practise, it is necessary that a short time will be required between switching actions to prevent shorting of the voltage source.

The voltage source is a DC link capacitor, and the switches are power semiconductors of an appropriate type and power rating for the given application. The power semiconductors are transistors, as thyristors are not suitable because of the need for a short time between the switching actions.

A more practical arrangement uses pulse width modulation techniques, this allows increased switching frequency to be used in order to improve the output waveforms and also allow variation in the output voltage by scaling the width of the pulses used. This arrangement is the same as the arrangement shown in Figure 1, and functions on the same principles as shown in Figure 2, but the neutral point is switched at a higher frequency to that discussed with reference to Figure 2.

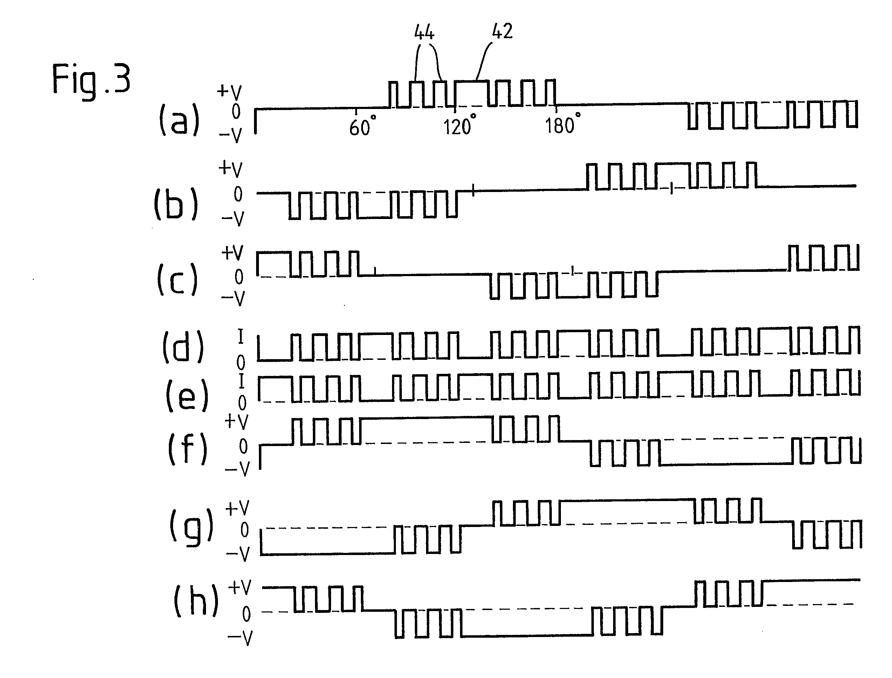

Figure 3 illustrates the arrangement for pulse width modulation techniques, in which the maximum output voltage is required from the converter, however reduced output voltages can be obtained by scaling down the width of the pulses. For full output voltage it is necessary to connect the voltage source to one of the three phase outputs throughout the complete output cycle, as opposed to the case where reduced output voltage is required when the voltage source is not connected at all times throughout the complete output cycle.

Graphs 3(a), 3(b) and 3(c) illustrates the voltage waveforms at the first phase output 22, the second phase output 28 and the third phase output 34 respectively.

Graphs 3(d) and 3(e) illustrate the operation of switches 36 and 38 respectively.

Graphs 3(f), 3(g) and 3(h) illustrate the line voltages obtained from the differences between the phase voltages. These are obtained respectively by the difference between the first phase output and the second phase output, the difference between the second phase output and the third phase output, and the difference between the third phase output and the first phase output.

The ratio of $\sqrt{3}$ to 1 between the line voltages and phase voltages is maintained in this example, provided that the pulses 44 forming the phase voltages waveforms are constrained to lie in the region $\pm 60^{\circ}$ around the peak 42 of the sinusoid representing each phase output voltage i.e. shown in Figure 3(a). This effectively avoids negative pulses occurring in the positive half cycle of the line voltage waveforms, and vice-versa, which would distort the line voltage waveforms. This constraint results in a factor of three between the neutral switching frequency and the desired converter output frequency, but in this case it is a group of pulses which appear, rather than a single pulse associated with each of the three output phases in the first arrangement. It may be possible to use other suitable neutral switching frequencies, equal to or multiples of the desired converter output frequency.

The switches require some form of timing mechanism which operates them, and keeps them in synchronisation, many such mechanisms are known and will not be discussed herein.

The arrangement discussed is suitable for three phase DC to AC electrical converters, when it is necessary to provide power to a single phase load, or for three phase AC to AC electrical converters, when it is necessary to provide power to a single phase load.

The present invention thus allows a three phase electrical converter to supply a single phase load by providing a commutated neutral point. The commutated neutral point being provided by the use of a pair of switches which alternately connect the neutral point with the output terminals of a voltage source.

## Claims

1. A three phase electrical converter comprising a voltage source (12) having output terminals (14,16), a first phase output (22), a second phase output (28), a third phase output (34) characterised in that a neutral output (40) is connected sequentially at the desired converter output frequency or at a multiple of the desired converter output frequency to the output terminals (14,16) of the voltage source (12) by a pair of switches (36,38) such that the output terminal connected to the neutral output (40) is referenced to earth potential.

2. A three phase electrical converter as claimed in claim 1 in which the connection of the neutral output (40) to the output terminals (14,16) of the voltage source (12) by the pair of switches (36,38) is modulated to produce peak voltages in the voltage signals at the three phase outputs (22,28,34) with voltage pulses positioned about the peak voltages.

3. A three phase electrical converter as claimed in claim 2 in which the connection is modulated so that the pulses are positioned symmetrically about the peak voltage.

4. A three phase electrical converter as claimed in claim 2 or claim 3 in which connection is modulated so that the pulses are positioned within a phase region of $\pm 60^{\circ}$ about the peak voltage.

5. A three phase electrical converter as claimed in any of claims 1 to 4 in which the first phase output (22) is connected sequentially at a first frequency to the output terminals (14,16) of the voltage source (12) by a first pair of switches (18,20), the second phase output (28) is connected sequentially at the first frequency and $120^{\circ}$ out of phase with the first phase output (22) to the output terminals (14,16) of the voltage source (12) by a second pair of switches (24,26), the third phase output (34) is connected sequentially at the first frequency and $120^{\circ}$ out of phase with the first phase output (22) and the second phase output (28) to the output terminals (14,16) of the voltage source (12) by a third pair of switches (30,32), the neutral output (40) is connected sequentially at the desired converter output frequency or at a multiple of the desired converter output frequency to the output terminals (14,16) of the voltage source (12) by a fourth pair of switches (36,38) such that the output terminal connected to the neutral output (40) is referenced to earth potential.

6. A three phase electrical converter as claimed in any of claims 2 to 4 in which the first phase output (22) is connected to one of the output terminals (14,16) of the voltage source (12) by a first pair of switches (18,20), the second phase output (28) is connected sequentially at a first frequency to the output terminals (14,16) of the voltage source (12) by a second pair of switches (24,26), the third phase output (34) is connected sequentially at the first frequency and 120° out of phase with the second phase output (28) to the output terminals (14,16) of the voltage source (12) by a third pair of switches (30,32), the neutral output (40) is connected sequentially at the desired converter output frequency or at a multiple of the desired converter output frequency to the output terminals (14,16) of the voltage source (12) by a fourth pair of switches (36,38) such that the output terminal connected to the neutral output (40) is referenced to earth potential.

7. A three phase electrical converter as claimed in any of claims 1 to 6 in which the switches (18,20,24,26,30,32,36,38) are power semi-conductors.

8. A three phase electrical converter as claimed in claim 7 in which the power semi-conductors are transistors.

9. A three phase electrical converter as claimed in any of claims 1 to 8 in which the voltage source (12) is a DC link capacitor.

10. A three phase electrical converter as claimed in any of claims 1 to 9 in which the fourth pair of switches (36,38) connect the neutral output (40) to the output terminals (14,16) at three times the desired converter output.

11. A three phase electrical converter as claimed in any of claims 1 to 10 in which the electrical converter is a DC to AC electrical converter.

12. A three phase electrical converter as claimed in any of claims 1 to 10 in which the electrical converter is an AC to AC electrical converter.

Fig.1

Fig.2

EP 0 331 849 A2

Fig. 3